# EUROPEAN PATENT APPLICATION

(11) **EP 2 360 127 A1**
(43) Date of publication of application: **24.08.2011**
(21) Application number: 09820591.7
(22) Date of filing: 14.10.2009
(51) Int. Cl.: C03C 3/17, C03C 3/16, C08K 3/40, C08L 69/00, C08L 77/00, C08L 101/00, C09D 7/12, C09D 201/00

(54) **LOW-MELTING GLASS, RESIN COMPOSITION COMPRISING SAME, AND RESIN MOLDED ARTICLE**

(30) Priority: 17.10.2008 JP 2008268094
(71) Applicant: Asahi Fiber Glass Company, Limited, Tokyo 101-0045 (JP)
(72) Inventor: ENDO, Hideki, Tokyo 101-0045 (JP); SHIMENO, Koichi, Tokyo 101-0045 (JP)
(74) Representative: Beacham, Annabel Rose
(86) International application number: PCT/JP2009/067767
(87) International publication number: WO 2010/044413

(57) **Abstract**

Disclosed is a low melting point glass which has excellent water resistance and can impart excellent flame retardancy to a resin composition. Also disclosed is a resin composition comprising the low melting point glass. Further disclosed is a resin molded article. Specifically disclosed is a low melting point glass which comprises 22-27 mol% of P₂O₅, 3-18 mol% of SO₃, 25-40 mol% of ZnO, 0-2 mol% of Al₂O₃, 0-4 mol% of Li₂O, 0-15 mol% of Na₂O and 11-35 mol% of K₂O, wherein the total amount of Li₂O, Na₂O and K₂O is 25-35 mol%. The low melting point glass has a glass transition temperature of 200 to 300°C exclusive. A resin composition is produced by mixing the low melting point glass with a resin. A resin molded article is produced by molding or curing the resin composition.

## Description

### Technical Field

The present invention relates to a low melting point glass that is capable of imparting excellent water resistance, flame retardancy, smoke generation suppressing property, and fire resistance to a resin composition, and a resin composition and a resin formed product both including the same.

### Background Art

A glass filler is widely used as a filler because it has effects of improving dimensional stability, moldability, and mechanical property of a resin composition. In particular, a low melting point glass having a specific glass composition has a function to shut out oxygen by forming a vitreous film on a surface of a formed product at the time of heating, and hence is expected to function as a flame retardant.

For example, Patent Literature 1 discloses that flame retardancy and smoke generation suppressing property may be imparted by blending the following glass powder into a resin composition. The glass powder has the composition of, as represented by mol% in terms of oxide, P₂O₅: 22 to 27%, SO₃: 8 to 18%, ZnO: 25 to 40%, Al₂O₃: 0 to 2%, B₂O₃: 0 to 10%, Li₂O+Na₂O+K₂O: 25 to 35% (provided that Li₂O: 5 to 15%, Na₂O: 8 to 20%, K₂O: 5 to 10%), MgO: 0 to 15%, CaO: 0 to 15%, BaO: 0 to 15%, and SnO: 0 to 15%, and has a glass transition temperature of more than 200°C and less than 300°C.
[Patent Literature 1] JP 2006-62945 A

### Summary of Invention

### Technical Problem

However, the glasspowder disclosedin PatentLiterature 1 was insufficient in terms of water resistance. When the water resistance of a glass powder is insufficient, moisture in air or the like easily deteriorates a glass surface. Thus, when such glass powder is blended in a resin that is said to have relatively poor water resistance, such as a polyamide resin or a polycarbonate resin, alkali components and the like are eluted from the deteriorated glass surface, causing reduction in the molecular weight of the resin. When the molecular weight of the resin reduces, physical properties of the resin itself reduce, and hence the flame retardancy and mechanical properties of the resultant resin formed product were not sufficient.

Thus, an object of the present invention is to provide a low melting point glass having excellent water resistance and being capable of imparting excellent flame retardancy to a resin composition, and a resin composition and a resin formed product both including the same.

### Solution to Problem

The inventors of the present invention have made various studies. As a result, the inventors have found that the water resistance of glass can be improved by reducing the content of Li₂O in the composition of the glass. Thus, the above-mentioned object has been accomplished. That is, a low melting point glass of the present invention includes 22 to 27 mol% of P₂O₅, 3 to 18 mol% of SO₃, 25 to 40 mol% of ZnO, 0 to 2 mol% of Al₂O₃, 0 to 4 mol% of Li₂O, 0 to 15 mol% of Na₂O, and 11 to 35 mol% of K₂O, in which: the total content of Li₂O, Na₂O, and K₂O is 25 to 35 mol%; and the low melting point glass has a glass transition temperature of more than 200°C and less than 300°C.

The low melting point glass of the present invention is made up of the above-mentioned composition, and hence the low melting point glass has improved water resistance. As a result, even if the low melting point glass is used to mix with a resin, reduction in the molecular weight of the resin is difficult to occur, and reduction in physical properties of the resin itself is not easily caused. Further, the low melting point glass has a glass transition temperature of more than 200°C and less than 300°C, and hence, in a resin formed product obtained by molding or curing a resin composition including the low melting point glass, glass components are easily melted by heat generated at the time when resin components are fired, and a glass film is easily formed in the surface layer of the resin formed product. Further, in the case where a char is formed in the surface layer of the resin formed product at the time when the resin formed product is fired, molten glass reinforces the char. As a result, the flame retardancy, smoke generation suppressing property, and fire resistance of the resin formed product can be improved.

In the low melting point glass of the present invention, it is preferred that the content of Li₂O be 0 to 1 mol%, the content of Na₂O be 0.1 to 7 mol%, and the content of K₂O be 20 to 34.9 mol%. The lowmeltingpoint glass is more preferably free of Li₂O. According to this aspect, the water resistance of the low melting point glass can be more improved while the glass transition temperature of the low melting point glass is kept at a temperature of more than 200°C and less than 300°C.

The low melting point glass of the present invention is preferably a glass powder having an average particle diameter of 0.5 to 20 µm. According to this aspect, when the low melting point glass is mixed with a resin, the low melting point glass is not separated from the resin and can be dispersed in the resin in an approximately uniform manner. Besides, mechanical properties of a resin formed product obtained by molding or curing a resin composition including the low melting point glass can be improved.

On the other hand, a resin composition of the present invention includes a resin and the above-mentioned low melting point glass.

The low melting point glass of the present invention has, as described above, good water resistance. Thus, even if the low melting point glass is used to mix with a resin, reduction in the molecular weight of the resin is difficult to occur, and reduction in physical properties of the resin itself is not easily caused. Further, the low melting point glass has a glass transition temperature of more than 200°C and less than 300°C, and hence, in a resin formed product obtained by molding or curing the resin composition, glass components are melted by heat generated at the time when resin components are fired, and a glass film is easily formed in the surface layer of the resin formed product. Further, molten glass can reinforce a char formed in the surface layer of the resin formed product at the time when the resin formed product is fired. As a result, a resin formed product excellent in flame retardancy, smoke generation suppressing property, and fire resistance can be obtained.

In the resin composition of the present invention, it is preferred that the resin composition be used for a molding material, and the resin composition includes 0.1 to 100 parts by mass of the low melting point glass with respect to 100 parts by mass of the resin. Subjecting the molding material to molding can produce a resin molded product excellent in flame retardancy, smoke generation suppressing property, and fire resistance.

In the resin composition of the present invention, the resin is preferably a polyamide resin or a polycarbonate resin. The polyamide resin and the polycarbonate resin are resins each having poor water resistance, but the low melting point glass has good water resistance. Thus, even if the low melting point glass is blended in the resin composition, the molecular weights of those resins are not easily reduced, and hence particularly remarkable effects can be obtained.

The resin composition of the present invention is preferably used for a paint, and the resin composition includes 0.1 to 300 parts by mass of the low melting point glass with respect to 100 parts by mass of a solid content excluding the low melting point glass in the paint. According to this aspect, the resin composition is excellent in storage stability as the paint and can form a coated film thereof excellent in hardness, flame retardancy, and fire resistance.

On the other hand, a resin formed product of the present invention is obtained by molding or curing the above-mentioned resin composition.

### Advantageous Effect of Invention

According to the present invention, there can be provided the resin formed product excellent in flame retardancy, smoke generation suppressing property, and fire resistance.

### Description of Embodiments

A low melting point glass of the present invention includes 22 to 27 mol% of P₂O₅, 3 to 18 mol% of SO₃, 25 to 40 mol% of ZnO, 0 to 2 mol% of Al₂O₃, 0 to 4 mol% of Li₂O, 0 to 15 mol% of Na₂O, and 11 to 35 mol% of K₂O, in which: the total content of Li₂O, Na₂O, and K₂O is 25 to 35 mol%; and the low melting point glass has a glass transition temperature of more than 200°C and less than 300°C.

If the glass transition temperature is 200°C or less, the glass is melted by heat generated at the time when a resin component is burned, and the glass tends to have a low viscosity and is liable to flow. Therefore, a glass film is hardly formed on a surface of a resin formed product, and as a result, the glass is poor in the effect of imparting flame retardancy. If the glass transition temperature of the low melting point glass is 300°C or more, a glass film is hardly formed on a surface of a resin formed product by heat generated at the time when a resin component is burned, and as a result, the glass may be poor in the effect of imparting flame retardancy. When the glass transition temperature is too low, the glass transition temperature can be adjusted by increasing the contents of ZnO and Al₂O₃ within the above-mentioned ranges or by decreasing the contents of P₂O₅, SO₃, Li₂O, Na₂O, and K₂O within the above-mentioned ranges. On the other hand, when the glass transition temperature is too high, the glass transition temperature can be adjusted by decreasing the contents of ZnO and Al₂O₃ within the above-mentioned ranges or by increasing the contents of P₂O₅, SO₃, Li₂O, Na₂O, and K₂O within the above-mentioned ranges. Hereinafter, each component of the low melting point glass is described.

In the low melting point glass of the present invention, P₂O₅ is an essential component. P₂O₅ is a component necessary for forming glass and is also a component for imparting flame retardancy to a resin. The content of P₂O₅ is 22 to 27 mol%, preferably 23 to 26 mol%. When the content of P₂O₅ is less than 22 mol%, vitrification becomes difficult, homogeneous glass is not provided, and moreover, glass tends to have a higher glass transition temperature. When the content of P₂O₅ is more than 27 mol%, water resistance necessary for glass cannot be secured, and moreover, glass tends to have a lower glass transition temperature.

In the low meltingpoint glass of the present invention, SO₃ is an essential component. SO₃ is a component that affects the solubility of glass at the time when the glass is melted and that also affects the water resistance of the resultant glass. The content of SO₃ is 3 to 18 mol%, preferably 8 to 15 mol%. When the content of SO₃ is less than 3 mol%, glass has a higher glass transition temperature. When the content of SO₃ is more than 18 mol%, water resistance necessary for glass remarkably reduces, and moreover, glass tends to have a lower glass transition temperature.

In the low melting point glass of the present invention, ZnO is an essential component. ZnO is a component for imparting flame retardancy and smoke generation suppressing property to a resin. The content of ZnO is 25 to 40 mol%, preferably 30 to 35 mol%. When the content of ZnO is less than 25 mol%, flame retardancy and smoke generation suppressing property cannot be sufficiently imparted to a resin, and moreover, glass tends to have a lower glass transition temperature. When the content of ZnO is more than 40 mol%, glass is liable to devitrify, and moreover, tends to have a higher glass transition temperature.

When the low melting point glass of the present invention contains Al₂O₃, the water resistance of the glass can be improved and the viscosity of the glass at the time when the glass is melted can be adjusted. However, when the content of Al₂O₃ is too high, the glass transition temperature increases, and hence the content of Al₂O₃ can be 0 to 2 mol%, preferably 0 to 1 mol%, more preferably 0 to 0.5 mol%.

In the low melting point glass of the present invention, Li₂O is a component that contributes to melting glass easily, but Li₂O easily reduces the water resistance of glass and is also an expensive material. The content of Li₂O is 0 to 4 mold%, preferably 0 to 1 mol%. The most preferred case is free of Li₂O. When the content of Li₂O is more than 4 mol%, not only the water resistance of glass is inferior, but also the content is not preferred from the viewpoint of economy because Li₂O is expensive. Note that, in the present invention, the phrase "free of Li₂O" means that the content of Li₂O is equal to or less than that of inevitable impurities.

In the low melting point glass of the present invention, Na₂O is a component that contributes to melting glass easily, and can contribute to easily preventing the devitrification of glass. The content of Na₂O is 0 to 15 mol%, preferably 0.1 to 15 mol%, more preferably 0.1 to 10 mol%, still more preferably 0.1 to 7 mol%, particularly preferably 3 to 7 mol%. The content of Na₂O at 0.1 mol% or more can prevent the devitrification of glass. Further, the content of Na₂O at less than 15 mol% can keep the water resistance of glass.

In the low melting point glass of the present invention, K₂O is an essential component. K₂O can contribute to easily melting glass without reducing the water resistance of the glass, and moreover, can contribute to preventing the devitrification of the glass with ease. The content of K₂O is 11 to 35 mol%, more preferably 15 to 34.9 mol%, still more preferably 20 to 34.9 mol%, most preferably 20 to 28 mol%. When the content of K₂O is more than 35 mol%, glass becomes liable to devitrify. On the other hand, when the content of K₂O is less than 11 mol%, the contents of other alkali components such as Li₂0 and Na₂O need to be increased in order to improve the meltability of glass, easily resulting in reduction in the water resistance of the glass.

In the low melting point glass of the present invention, the total content of Li₂O, Na₂O, and K₂O needs to be 25 to 35 mol%. When the total content is less than 25 mol%, glass does not melt sufficiently and vitrification becomes difficult to occur. On the other hand, when the total content is more than 35 mol%, water resistance necessary for glass remarkably reduces. Further, it is more preferred that Li₂O be contained at 0 to 1 mol%, Na₂O at 0.1 to 10 mol%, and K₂O at 15 to 34.9 mol%, and the total content of Na₂O and K₂O be 25 to 35 mol%. It is still more preferred that Li₂O be contained at 0 to 1 mol%, Na₂O at 0.1 to 7 mol%, and K₂O at 20 to 34.9 mol%, and the total content of Na₂O and K₂O be 25 to 35 mol%. Among the alkali metal oxides described above, Li₂O is a component that contributes to easily reducing the water resistance of glass, and hence the use of Li₂O should be avoided and being free of Li₂O is particularly preferred. It is most preferred that glass be free of Li₂O and contain Na₂O at 3 to 7 mol% and K₂O at 20 to 28 mol%, and moreover, the total content of Na₂O and K₂O be 25 to 35 mol%.

The low melting point glass of the present invention is preferably substantially free of B₂O₃. When B₂O₃ is contained, water resistance necessary for glass is improved and the viscosity of glass can be easily controlled when the glass is melted. However, the glass transition temperature becomes higher, and hence it is difficult to adjust the glass transition temperature within the range defined in the present invention. Further, B₂O₃ is liable to volatilize, and if glass is produced so as to be free of B₂O₃, environmental load can be reduced. Note that, in the present invention, the phrase "free of B₂O₃" means that the content of B₂O₃ is equal to or less than that of inevitable impurities.

Even if other components than those described above are present in the low melting point glass of the present invention within the range of content that does not impair the effects of the present invention, no problem is caused. For instance, MgO, CaO, SrO, BaO, and the like may be added to adjust the liquidity and stability of glass. In addition, oxides of metals such as Ti, Fe, Co, Ni, Sn, Zr, and Mo may be contained as components in the glass composition.

The low melting point glass of the present invention is preferably a glass powder having an average particle diameter (based on volume, D50) of 0.5 to 20 µm, more preferably 0.7 to 5 µm. When the average particle diameter of a glass powder is less than 0.5 µm, it requires time and effort to adjust the glass powder so as to have an average particle diameter within the above-mentioned ranges. As a result, production cost increases, the cost of the glass powder as an additive to a resin increases, and the ranges to which the glass powder can be applied are restricted in some cases. When the average particle diameter of a glass powder is more than 20 µm, mechanical characteristics of a resin formed product may be insufficiently exhibited. Note that, in the present invention, the values of the above-mentioned average particle diameter are those obtained by measurement using a laser scattering type particle size measuring apparatus (LA-700, manufactured by Horiba Ltd.).

The glass powder may be obtained by, for example, mixing glass-forming materials to achieve the glass composition defined in the present invention, melting the materials, then solidifying the resultant to prepare a glass cullet of low melting point glass, and grinding the glass cullet to achieve a predetermined average particle diameter by means of a known method and an apparatus. Further, as a method of grinding the glass cullet, there are given a wet grinding method by means of, e.g., a medium stirring mill, a colloid mill, or a wet ball mill, a dry grinding method by means of, e.g., a jet mill, a dry ball mill, or a roll crusher, and the like. A plurality of grinding methods may be used in combination. Further, a classification treatment may be carried out so that the average particle diameter of the glass powder obtained by grinding falls within a predetermined diameter range (for example, 0.5 to 20 µm). The classification treatment is not particularly limited, but it is preferred to use an air classifier, a sieving apparatus, or the like.

It is possible to impart treatment agents such as a coupling agent, a urethane resin, and an epoxy resin to the low melting point glass of the present invention in order to improve the compatibility with a resin.

Next, a resin composition of the present invention is described.

The resin composition of the present invention is a composition that at least includes the above-mentioned low melting point glass and a resin. The above-mentioned low melting point glass is blended, imparting flame retardancy to the resin composition of the present invention, which can be suitably used as a flame retardant resin composition.

The low melting point glass to be used for the resin composition of the present invention is preferably used as a glass powder.

A resin to be used for the resin composition of the present invention is not particularly limited because the resin varies depending on applications, purposes, and the like of a resin formed product. For example, in the case of using the resin formed product for an electrical part application, there is preferably used an engineering plastic such as a polycarbonate-based resin, an aromatic polyester-based resin, a polyamide-based resin, a polyarylate-based resin, a polyphenylene sulfide-based resin, a polyphenylene ether-based resin, a polysulfone-based resin, a polyether sulfone-based resin, a polyether ether ketone-based resin, a polyimide-based resin, a polyetherimide-based resin, a polyethylene terephthalate resin, a polybutylene terephthalate resin, a syndiotactic polystyrene-based resin, a polyethylene oxide-based resin, a liquid crystal polymer, or a fluorine-based resin.

Further, in the case of using the resin composition for a paint, there is preferably used, for example, an acrylic resin, a urethane-based resin, an epoxy-based resin, a silicon-based resin, a fluorine-based resin, an imide-based resin, or the like.

In addition, various resins can be used as well as the above-mentioned resins. For example, there are given: polyolefin-based resins typified by a polyethylene resin, a polypropylene resin, and the like; a polystyrene-based resin; an acrylonitrile-butadiene-styrene copolymer; a styrene-acrylonitrile copolymer; a polymethyl methacrylate-based resin; a polyvinyl acetate-based resin; a polyvinyl alcohol-based resin; a thermoplastic polyurethane-based resin; a polylactic acid-based resin; a polyvinyl chloride-based resin; a chlorinated vinyl chloride-based resin; a chlorinated polyethylene-based resin; a polyepichlorohydrin-based resin; a polyvinylidene chloride-based resin; and the like.

The low melting point glass of the present invention has good water resistance, and elution of alkali components or the like is very rarely caused on the glass surface. Thus, even in the case of adopting a resin having poor water resistance, such as a polyamide resin or a polycarbonate resin, the molecular weight of the resin is difficult to reduce. The use of the resin having poor water resistance, such as a polyamide resin or a polycarbonate resin, therefore provides remarkable effects.

The form of a resin to be used in the resin composition of the present invention is not particularly limited, and various forms such as a pellet form, a grain form, a powder form, a fiber form, and a liquid form can be used. Further, a thermoplastic resin out of the above-mentioned resins may include a thermoplastic resin composition obtained by recycling a molded product or a resin formed product such as a coated film obtained by molding or curing a thermoplastic resin composition.

The form of the resin composition of the present invention is not particularly limited, and examples thereof include a molding material having a form such as a pellet form or a grain form, and a paint.

When the resin composition is used for a molding material, the resin composition contains, with respect to 100 parts by mass of a resin, preferably 0.1 to 100 parts by mass of the low melting point glass, more preferably 1 to 70 parts by mass. Further, when a thermoplastic resin that is relatively less combustible, such as a polycarbonate-based resin, is used, it is good enough for the low melting point glass to be contained at 0.1 to 50 parts by mass in order to attain sufficient flame retardancy, and the low melting point glass is still more preferably contained at 1 to 30 parts by mass. Further, when a vinyl chloride-based resin is used, it is good enough for the low melting point glass to be contained at 1 to 100 parts by mass in order to sufficiently attain the effect of smoke generation suppressing property and improvement of mechanical properties, and the low melting point glass is still more preferably contained at 5 to 70 parts by mass.

When the resin composition is a molding material, the resin composition of the present invention may include an anti-dripping agent and a flame retardant additionally. The resin composition of the present invention may also include a coupling agent, a film former, a lubricant, an antistatic agent, and the like separately from those contained in the treatment agents for the low melting point glass described above. The resin composition may further include various additives such as a stabilizer and a slip additive in addition to the above-mentioned components. As such additives, there may be appropriately adopted, for example, a coupling agent such as a silane-based coupling agent, a plasticizer such as a phthalate ester, a slip additive such as a stearic acid derivative, an antioxidant such as a hindered phenol, a heat stabilizer such as an organotin compound, an ultraviolet absorber such as a benzotriazole-based compound, a colorant such as a pigment, an antistatic agent such as a surfactant, a filler such as calcium carbonate, and a reinforcing material such as a glass fiber.

The molding material can be produced by mixing and melting a resin, the low melting point glass, and other additives additionally blended if necessary simultaneously (for example, melt kneading), or mixing the components before melting, and then forming the resultant mixture into materials with various forms such as a pellet form, a grain form, and a powder form. The form of the molding material is not particularly limited, and various forms such as a pellet form, a grain form, and a powder form may be adopted. The molding material is particularly preferably in a pellet form or a grain form.

The molding material obtained as described above may be molded by a conventionally known method into a molded product. Examples of the molding method include press molding, extrusion molding, calendar molding, injection molding, and pultrusion.

The molded product may be used, for example, for electronic applications such as housing materials for electric appliances, covering materials for electric wires, sealing materials for semiconductors, and printed wiring boards, and for vehicle applications mainly including interior materials such as seat cushions, door panels, front panels, and rear panels. There are given as further applications, for example, roof-related components such as roofs, eaves, and gutters, components for exterior and outer walls such as siding materials, deck materials, and fence materials, opening-related components such as window frames, doors, and gates, interior-related components such as wall materials, floor materials, ceiling materials, and heat insulating materials, and other building components and building decoration materials, furniture materials, disaster prevention troughs, and sign boards. Note that it is not necessary to go through the form of a molding material, but a molded product can also be obtained by melting and mixing a resin, the low melting point glass, and other additives additionally if necessary in a molding machine such as an injection molding machine or an extrusion molding machine and then molding the molten mixture.

On the other hand, when the resin composition is used for a paint, the paint is produced so as to contain, with respect to 100 parts by mass of a solid content excluding the low melting point glass in the paint, preferably 0.1 to 300 parts by mass of the low melting point glass, more preferably 1 to 100 parts by mass. The paint containing the low melting point glass at a ratio within the above-mentioned ranges is excellent in store stability necessary for a paint. Further, curing the paint produces a resin formed product as a coated film. This coated filmhas hardness, and moreover, the coated film is excellent in fire resistance and flame retardancy, because, when the coated film is fired, resin components in the coated film are fired to form a char in the surface layer of the coated film, glass components in the coated film are melted by heat generated at the time when the resin components are fired, the molten glass components transfer into the surface layer of the coated film, and the glass components form a glass film on the surface layer while reinforcing the char. Therefore, when the resin composition of the present invention is used as a paint, the resin composition is particularly suitable as a fire-resistant, heat-insulating paint. Examples

Hereinafter, specific examples of the present invention are described. However, the present invention is not limited thereto.

[Measuring methods and evaluation methods] Average particle diameter of glass powder (D50) : Measurement was performed with a laser scattering type particle size measuring apparatus ("LA-700", manufactured by Horiba, Ltd.).

Glass transition temperature (hereinafter, referred to as Tg) : Measurement was performed for a product obtained by grinding a glass cullet so as to have a size of 10 µm, with a differential thermal analyzer (DTA) set at a heating rate of 10 °C/min in a nitrogen atmosphere. A temperature at the shoulder of a first heat absorption peak in the resultant DTA curve was read as a glass transition temperature.

Water resistance: A glass cullet (having a plate shape of about 15 mm square and about 6 mm thick) was weighed as a sample, was immersed in a hot water bath of 90°C, was taken out from the bath 6 hours later, and was dried at room temperature. After that, the resultant sample was weighed to measure a mass loss rate.

Viscosity-average molecular weight: A capillary viscometer was used to measure the flow time of a polymer dilute solution, followed by determination of an intrinsic viscosity [η], and a viscosity-average molecular weight (M) was calculated based on the viscosity formula, [η]=KMa.

Flame retardancy test: In accordance with the UL94 standard, test specimens each having a width of 12.7 mm, a length of 127 mm, and a thickness of 1.6 mm were used to carry out a vertical burning test five times, i.e., once for each of five test specimens made up of the same composition. The burning times of the five test specimens were summed up and the resultant time was defined as a total burning time (second). The case where the total burning time exceeded 250 seconds was defined as non-measurable. In accordance with the determination criteria with the above-mentioned standard, each of the test specimens was classified into any of the flammability classes of V-0, V-1, and V-2. The case where the total burning time was 50 seconds or less and no absorbent cotton was ignited by burning material or fallen material was determined as V-0. The case where the total burning time was more than 50 seconds and 250 seconds or less and no absorbent cotton was ignited by burning material or fallen material was determined as V-1. The case where the total burning time was more than 50 seconds and 250 seconds or less and absorbent cotton was ignited by burning material or fallen material was determined as V-2. Note that the case which was not classified into any of V-0, V-1, and V-2 was determined as V-OUT.

Deflection temperature under load (hereinafter, referred to as DTUL): Test specimens each having a thickness of 3.2 mm, a width of 12.7 mm, and a length of 127 mm were prepared, and a test was carried out in accordance with ASTM-D648.

Flexural strength: A test was carried out in accordance with ASTM-D790.

Flexural modulus: A test was carried out in accordance with ASTM-D790.

Tensile strength: A test was carried out in accordance with ASTM-D638.

IZOD impact strength: A test was carried out by using test specimens each having a thickness of 1/8 inch and a V-notch in accordance with ASTM-D256.

[Preparation of glass powder]
Materials were mixed according to the composition listed in Table 1, and the resultant mixture was melted and solidified, producing a glass cullet. The glass cullet was ground and the average particle diameter (D50) of the resultant was adjusted to 3.5 µm. Thus, a glass powder was produced for each of Examples 1 to 4 and Comparative Examples 1 to 3. The glass transition temperature and water resistance of the resultant glass powder were measured. Table 1 collectively shows the results.

**[Table 1]**

| | | Example 1 | Example 2 | Example 3 | Example 4 | Comparative Example 1 | Comparative Example 2 | Comparative Example 3 |
|---|---|---|---|---|---|---|---|---|
| Composition (mol%) | P₂O₅ | 24.8 | 24.8 | 24.8 | 24.8 | 24.8 | 24.8 | 24.8 |
| | SO₃ | 14.6 | 14.6 | 14.6 | 14.6 | 14.6 | 14.6 | 14.6 |
| | Li₂O | 0 | 4 | 0 | 0 | 9 | 5 | 14 |
| | Na₂O | 5 | 10 | 10 | 15 | 10.6 | 15 | 8 |
| | K₂O | 22 | 13 | 17 | 12 | 7.4 | 7 | 5 |
| | B₂O₃ | 0 | 0 | 0 | 0 | 0 | 0 | 0 |
| | ZnO | 33.6 | 33.6 | 33.6 | 33.6 | 33.6 | 33.6 | 33.6 |
| | Al₂O₃ | 0 | 0 | 0 | 0 | 0 | 0 | 0 |
| Characteristics of glass | Tg(°C) | 245 | 243 | 246 | 248 | 240 | 242 | 238 |
| | Water resistance (%) | 0.3 | 0.7 | 0.5 | 0.7 | 1.2 | 1.3 | 1.5 |

As shown in Table 1, alkali components were difficult to elute from the glass powders of Examples 1 to 4, which had good water resistance. Of those, the glass powder of Example 1, which was free of Li₂O, contained Na₂O at 0.1 to 7 mol%, and contained K₂O at 20 to 34.9 mol%, exhibited very good water resistance.

### [Resin formed product]

### (Example 5)

A resin molded product of Example 5 was obtained in the following manner. Preliminarily mixed into 100 parts by mass of a polycarbonate-based resin (product name "LEXAN 121R", manufactured by SABIC Innovative Plastics) were 5 parts by mass of the glass powder of Example 1 (average particle diameter (D50): 3.5 µm, a powder untreated with a treatment agent) and 0.2 part by mass of polytetrafluoroethylene (average particle diameter: 475 µm, manufactured by Asahi Glass Co., Ltd.) as an anti-dripping agent. After that, the mixture was melted and kneaded by using a biaxial extruder in which the temperature of a cylinder was set to 260°C, thereby obtaining a pellet-like resin composition. The pellet-like resin composition was dried at 120°C for 5 hours and then molded by using an injection molding machine at a cylinder temperature of 290°C and a mold temperature of 105°C, thereby producing the resin molded product of Example 5.

### (Example 6)

Apellet-like resin composition was obtained in the same manner as in Example 5, except that 5 parts by mass of the glass powder of Example 3 (average particle diameter (D50): 3.5 µm, a powder untreated with a treatment agent) were blended in place of the glass powder of Example 1 in Example 5, thereby producing a resin molded product of Example 6.

### (Comparative Example 4)

Apellet-like resin composition was obtained in the same manner as in Example 5, except that 5 parts by mass of the glass powder of Comparative Example 1 (average particle diameter (D50) : 3.5 µm, a powder untreated with a treatment agent) were blended in place of the glass powder of Example 1 in Example 5, thereby producing a resin molded product of Comparative Example 4.

### (Comparative Example 5)

Apellet-like resin composition was obtained in the same manner as in Example 5, except that the glass powder of Example 1 and the anti-dripping agent were not blended in Example 5, thereby producing a resin molded product of Comparative Example 5.

There were measured the viscosity-average molecular weight, flame retardancy, deflection temperature under load (DTUL), flexural strength, and IZOD impact strength of each of the resin molded products of Examples 5 and 6 and Comparative Examples 4 and 5. Table 2 shows the results.

**[Table 2]**

| | | | Example 5 | Example 6 | Comparative Example 4 | Comparative Example 5 |
|---|---|---|---|---|---|---|
| Composition (parts by mass) | Polycarbonate-based resin | | 100 | 100 | 100 | 100 |
| | Anti-dripping agent | | 0.2 | 0.2 | 0.2 | - |
| | Glass powder of Example 1 | | 5 | - | - | - |
| | Glass powder of Example 3 | | - | 5 | - | - |
| | Glass powder of Comparative Example 1 | | - | - | 5 | - |
| Viscosity-average molecular weight | | | 18,500 | 17,800 | 16,000 | 20,200 |
| Physical properties of resin molded product | Flame retardancy test | Burning time (second) | 32 | 38 | 46 | 60 |
| | | Determination | V-0 | V-0 | V-1 | V-2 |
| | DTUL(°C) | | 125 | 125 | 124 | 123 |
| | Izod impact strength of test specimen with V-notch (KJ/m²) | | 5.3 | 5.1 | 4.2 | 48 |
| | Flexural strength (MPa) | | 90 | 85 | 72 | 104 |

As evident from the results shown in Table 2, in each of Examples 5 and 6 compared with Comparative Example 4, the molecular weight of the resin was hard to reduce, the mechanical strength was excellent, and the flame retardancy test showed the evaluation of V-0. In particular, in Example 5 using the glass powder of Example 1, the molecular weight of the resin was particularly hard to reduce, and the flame retardancy test result and mechanical properties were good.

### (Example 7)

A resin molded product of Example 7 was obtained in the following manner. Preliminarily mixed into 100 parts by mass of a polyamide-based resin (product name "Ny66: ZYTEL 101", manufactured by DuPont) were 10 parts by mass of the glass powder of Example 1 (average particle diameter (D50): 3.5 µm, a powder untreated with a treatment agent) and 20 parts by mass of a flame retardant (product name "EXOLIT OP1312", manufactured by Clariant). After that, the mixture was melted and kneaded by using a biaxial extruder in which the temperature of a cylinder was set to 270°C, followed by further addition thereto of 30 parts by mass of E-glass chopped strand (fiber length: 3 mm) , thereby obtaining a pellet-like resin composition. The pellet-like resin composition was dried at 80°C for 5 hours and then molded by using an injection molding machine at a cylinder temperature of 270°C and a mold temperature of 80°C, to thereby produce the resin molded product.

### (Comparative Example 6)

Apellet-like resin composition was obtained in the same manner as in Example 5, except that 10 parts by mass of the glass powder of Comparative Example 1 (average particle diameter (D50) : 3.5 µm, a powder untreated with a treatment agent) were blended in place of the glass powder of Example 1 in Example 7, thereby producing a resin molded product of Comparative Example 6.

### (Comparative Example 7)

Apellet-like resin composition was obtained in the same manner as in Example 5, except that the glass powder of Example 1 and the flame retardant were not blended in Example 7, thereby producing a resin molded product of Comparative Example 7.

There were measured the flame retardancy, deflection temperature under load (DTUL) , flexural strength, flexural modulus, tensile strength, and IZOD impact strength of each of the resin molded products of Example 7 and Comparative Examples 6 and 7. Table 3 shows the results.

**[Table 3]**

| | | | Example 7 | Comparative Example 6 | Comparative Example 7 |
|---|---|---|---|---|---|
| Composition (parts by mass) | Polyamide-based resin | | 100 | 100 | 100 |
| | Flame retardant | | 20 | 20 | - |
| | Glass powder of Example 1 | | 10 | - | - |
| | Glass powder of Comparative Example 1 | | - | 10 | - |
| | Chopped strand | | 30 | 30 | 30 |
| Physical properties of resin molded product | Flame retardancy test | Burning time (second) | 91 | Non-measurable | Non-measurable |
| | | Determination | V-1 | V-OUT | V-OUT |
| | Izod - impact strength of test specimen with V-notch (KJ/m²) | | 10.5 | 10.6 | 12.4 |
| | Flexural strength (MPa) | | 267 | 268 | 315 |
| | Flexural modulus (MPa) | | 10,430 | 10,577 | 9,810 |
| | Tensile strength (MPa) | | 157 | 157 | 200 |

As evident from the results shown in Table 3, in Example 7, the flame retardancy test showed the evaluation of V-1. On the other hand, in each of Comparative Example 5 using the glass powder of Comparative Example 1 and Comparative Example 6 using no glass powder, the flame retardancy test showed the evaluation of V-OUT.

### (Example 8)

A paint of Example 8 was obtained in the following manner. Twenty parts by mass of the glass powder of Example 1 (average particle diameter (D50) : 3.5 µm, a powder untreated with a treatment agent) were added to an industrial water-based acrylic paint (product name: "O-DE ECOLINE STANDARD", manufactured by Nippon Paint Co., Ltd.), with respect to 100 parts by mass of the solid content of the paint, to thereby produce the paint. One hour, three hours, and six hours after the glass powder was compounded, the stability of the paint liquid was observed. After that, a coated film was formed by coating each paint by spraying (wet 140 g/m²) on a test piece (iron plate of 10 cm square and 9 mm thick), followed by drying at 150° for 20 minutes.

### (Comparative Example 8)

A coated film was formed in the same manner as in Example 8, except that the paint was prepared by compounding 20 parts by mass of the glass powder of Comparative Example 1 (average particle diameter (D50) : 3.5 µm, a powder untreated with a treatment agent) in place of the glass powder of Example 1 (average particle diameter (D50) : 3.5 µm, a powder untreated with a treatment agent) in Example 8.

The stability of the paints, and the appearance, hardness, and back surface temperatures of the coated films of Example 8 and Comparative Example 8 were measured. The back surface temperatures were measured by a non-combustibility test method. Table 4 shows the results.

Note that the stability of paint liquids was determined by observing the state of the liquids in which a paint and a glass powder were mixed. The state in which no separation was observed (dispersing) was represented by "○" . The state in which separation was slightly observed was represented by "Δ". The state in which separation was observed was represented by "×".

The states of coated films were evaluated by visual observation. A good state was represented by "○". The state in which pockmarks were slightly observed was represented by "Δ" . The state in which pockmarks were observed was represented by "×".

The brittleness of coated films was determined by carrying out a test using a grid tape method. A coated film formed by using a paint that was kept for one hour after the glass powder of Example 8 was compounded was defined as the standard. A coated film with the same quality as the standard (a coated film having more peeling compared with the standard by less than 5%) was represented by "○" . A coated film with slightly poorer quality than the standard (a coated film having more peeling compared with the standard by 5% to 10%) was represented by "Δ" . A coated film with poorer quality than the standard (a coated film having more peeling compared with the standard by more than 10%) was represented by "×".

The hardness of coated films was evaluated by tactile sensation with fingers. A coated film formed by using a paint that was kept for one hour after the glass powder of Example 8 was compounded was defined as the standard. A coated film with the same quality as the standard was represented by "○" . A coated film with slightly poorer quality than the standard was represented by "Δ" . A coated film with poorer quality than the standard was represented by "×" .

The measurement of the back surface temperature was carried out by using a non-combustibility test method (cone calorimeter). A temperature sensor was attached on the back surface of a test piece to read the highest temperature during the testing time of 20 minutes.

**[Table 4]**

| | | Example 8 | | | Comparative Example 8 | | |
|---|---|---|---|---|---|---|---|
| | | 1 hr | 3 hr | 6 hr | 1 hr | 3 hr | 6 hr |
| Liquid stability | | ○ | ○ | ○ | Δ | × | × |
| Performance of coated film | State of coated film | ○ | ○ | ○ | ○ | Δ | × |
| | Brittleness of coated film | ○ | ○ | ○ | Δ | × | × |
| | Hardness of coated film (after testing) | ○ | ○ | ○ | Δ | × | × |
| | Back surface temperature (°C) | 600 | 600 | 600 | 640 | 650 | 650 |

As shown by the results, the paint of Example 8 was excellent in storage stability, and the coated film formed by using this paint had moderate hardness and was excellent in fire resistance and heat-insulating property.

## Claims

1. A low melting point glass, comprising 22 to 27 mol% of P₂O₅, 3 to 18 mol% of SO₃, 25 to 40 mol% of ZnO, 0 to 2 mol% of Al₂O₃, 0 to 4 mol% of Li₂O, 0 to 15 mol% of Na₂O, and 11 to 35 mol% of K₂O, wherein:
a total content of Li₂O, Na₂O, and K₂O is 25 to 35 mol%; and
the low melting point glass has a glass transition temperature of more than 200°C and less than 300°C.

2. A low melting point glass according to claim 1, wherein a content of Li₂O is 0 to 1 mol%, a content of Na₂O is 0.1 to 7 mol%, and a content of K₂O is 20 to 34.9 mol%.

3. A low melting point glass according to claim 1 or 2, wherein the low melting point glass is free of Li₂O.

4. A low melting point glass according to any one of claims 1 to 3, wherein the low melting point glass is a glass powder having an average particle diameter of 0.5 to 20 µm.

5. A resin composition, comprising a resin and the low melting point glass according to any one of claims 1 to 4.

6. A resin composition according to claim 5, wherein:
the resin composition is used for a molding material; and
the resin composition comprises 0.1 to 100 parts by mass of the low melting point glass with respect to 100 parts by mass of the resin.

7. A resin composition according to claim 5 or 6, wherein the resin is a polyamide resin or a polycarbonate resin.

8. A resin composition according to claim 5, wherein:
the resin composition is used for a paint; and
the resin composition comprises 0.1 to 300 parts by mass of the low melting point glass with respect to 100 parts by mass of a solid content excluding the low melting point glass in the paint.

9. A resin formed product, which is obtained by molding or curing the resin composition according to any one of claims 5 to 8.
